# EUROPEAN PATENT APPLICATION

(11) **EP 3 379 826 A1**
(43) Date of publication of application: **26.09.2018**
(21) Application number: 16865444.0
(22) Date of filing: 19.05.2016
(51) Int. Cl.: H04N 7/18

(54) **METHOD FOR MONITORING MOVING TARGET, AND MONITORING DEVICE, APPARATUS AND SYSTEM**

(30) Priority: 19.11.2015 CN 201510800532
(71) Applicant: Hangzhou Hikvision Digital Technology Co., Ltd., Hangzhou, Zhejiang 310051 (CN)
(72) Inventor: GU, Chuan, Hangzhou Zhejiang 310051 (CN); XU, Zhuodong, Hangzhou Zhejiang 310051 (CN); CHEN, Shuyi, Hangzhou Zhejiang 310051 (CN); HONG, Huilu, Hangzhou Zhejiang 310051 (CN)
(74) Representative: Banzer, Hans-Jörg
(86) International application number: PCT/CN2016/082611
(87) International publication number: WO 2017/084262

(57) **Abstract**

Embodiments of the present application provide a method, a monitoring device, an apparatus, and a system for monitoring a moving target, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

## Description

The present application claims the priority to a Chinese patent application No. 201510800532.8 filed with the State Intellectual Property Office of People's Republic of China on November 19, 2015 and entitled "Method for Monitoring Moving Target, and Monitoring Device, apparatus, and System", which is incorporated herein by reference in its entirety.

### Technical Field

The present application relates to the technical filed of monitoring, and in particular, to a method, a monitoring device, an apparatus, and a system for monitoring a moving target.

### Background

With the development of science and technology and the increase of people's needs, video monitoring technology has developed rapidly. Video monitoring technology has been widely used in many places such as banks, residential areas, airports, and stations, and plays an increasingly important role in the field of public safety.

Currently, in order to monitor a moving target, the existing video monitoring in the art is to mount a plurality of monitoring devices with different orientations on the moving trajectory of the moving target and monitor the moving target from different angles by the plurality of monitoring devices.

While a plurality of monitoring devices are provided, a blind monitoring spot may still exist. When the moving target reaches the monitoring blind monitoring spot, the current monitoring technology cannot continue to obtain an image of the moving target, thus resulting in monitoring failure.

### Summary of the Invention

An objective of embodiments of the present application is to provide a method, a monitoring device, an apparatus, and a system for monitoring a moving target to increase the success rate of monitoring a moving target. The specific technical solution is provided as follows.

A method for monitoring a moving target, wherein, a monitoring device is provided at each monitoring point location in a moving trajectory of the moving target, the monitoring device is mounted on a rotating mechanism, and there are a plurality of monitoring point locations in the moving trajectory, and the method includes:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.
Optionally, the movement parameters include a moving distance and a moving direction of the moving target in the monitoring pictures; the rotation parameters include a rotating angle and a rotating direction of the rotating mechanism;
determining rotation parameters of the rotating mechanism based on the determined movement parameters comprises:
   determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
      or,
   determining rotation parameters of the rotating mechanism based on the determined movement parameters comprises:
      performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

Optionally, the method is applied in the monitoring device, and the method further includes:
determining the next monitoring device with respect to a current monitoring device in a monitoring sequence based on the moving direction of the moving target; when the rotating angle of the rotating mechanism on which the current monitoring device is mounted reaches a preset threshold, sending a starting monitoring instruction to the next monitoring device such that the next monitoring device starts to monitor the moving target.

Optionally, the method is applied in a control device that communicatively connects with each of the monitoring devices, and the method further includes:
determining a monitoring sequence of the monitoring devices based on the moving direction of the moving target; determining a current monitoring device corresponding to the actual position of the moving target based on position information of the moving target in the monitoring picture of each monitoring device; when the rotating angle of the rotating mechanism on which the current monitoring device is mounted reaches a preset threshold, sending a starting monitoring instruction to the next monitoring device in the monitoring sequence such that the next monitoring device starts to monitor the moving target.

Optionally, the method is applied in a monitoring device, and the method further includes any one or more of an alarm scheme 1, an alarm scheme 2, and an alarm scheme 3, wherein
in the alarm scheme 1, determining whether an image of the moving target has been captured, and if determining that an image of the moving target has been captured, determining whether the image of the moving target is outside a preset image area, and if determining that the image of the moving target is outside a preset image area, performing alarm processing;
in the alarm scheme 2, if the determined movement parameters are not within a preset threshold range, performing alarm processing;
in the alarm scheme 3, determining whether the captured image contains an image with a preset danger feature, and if yes, performing alarm processing.

Optionally, the method is applied in a control device that communicatively connects with each of the monitoring devices, and the method further includes any one or more of the alarm scheme 4, alarm scheme 5, alarm scheme 6, and alarm scheme 7, wherein
in the alarm scheme 4, determining whether each monitoring device has captured an image of the moving target, and if determining that each monitoring device has captured an image of the moving target, determining whether each captured image of the moving target is within a preset image area, and if determining that this captured image of the moving target is within a preset image area, performing alarm processing;
in the alarm scheme 5, if the determined movement parameters are not within a preset threshold range, performing alarm processing;
in the alarm scheme 6, identifying any image with a preset danger feature from the images captured by the monitoring devices, and if an image with a preset danger feature is identified, performing alarm processing;
in the alarm scheme 7, determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

A monitoring device, wherein, the monitoring device is mounted on a rotating mechanism, a monitoring device mounted on the rotating mechanism is provided at each monitoring point location in a moving trajectory of a moving target, there are a plurality of monitoring point locations in the moving trajectory, and the monitoring device includes:
an image capturing module configured for obtaining images of the moving target in monitoring pictures captured at a first moment and a second moment;
an image analyzing module configured for analyzing the obtained images to determine movement parameters of the moving target;
a data computing module configured for determining rotation parameters of the rotating mechanism based on the determined movement parameters;
a rotation controlling module configured for controlling the rotating mechanism to rotate based on the determined rotation parameters.

Optionally, the movement parameters include a moving distance and a moving direction of the moving target in the monitoring pictures; the rotation parameters include a rotating angle and a rotating direction of the rotating mechanism;
the data computing module is specifically configured for: determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module is specifically configured for: performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

Optionally, the monitoring device further includes:
an instruction sending module configured for determining the next monitoring device with respect to the monitoring device in a monitoring sequence based on the moving direction of the moving target, and when the rotating angle of the rotating mechanism on which the monitoring device is mounted reaches a preset threshold, sending a starting monitoring instruction to the next monitoring device such that the next monitoring device starts to monitor the moving target.

Optionally, the monitoring device further includes an alarming module for performing alarm processing, and
the image analyzing module is further configured for determining whether an image of the moving target has been captured by the monitoring device, and if determining that an image of the moving target has been captured by the monitoring device, determining whether the image of the moving target is outside a preset image area, and if determining that the image of the moving target is outside a preset image area, triggering the alarming module;
or,
the image analyzing module is further configured for triggering the alarming module when the determined movement parameters are not within a preset threshold range;
or,
the image analyzing module is further configured for determining whether the captured image contains an image with a preset danger feature, and if yes, triggering the alarming module.

A monitoring apparatus includes a rotating mechanism and any one of the monitoring devices described above, and the monitoring device is mounted on the rotating mechanism.

A monitoring system, includes: a plurality of monitoring devices each of which is mounted on a rotating mechanism and a control device that communicatively connects with each of the monitoring devices, a monitoring device mounted on the rotating mechanism is provided at each monitoring point location in a moving trajectory of a moving target, there are a plurality of monitoring point locations in the moving trajectory, and the control device includes:
an image capturing module configured for obtaining images of the moving target in monitoring pictures captured at a first moment and a second moment by the monitoring device;
an image analyzing module configured for analyzing the obtained images to determine movement parameters of the moving target;
a data computing module configured for determining rotation parameters of the rotating mechanism based on the determined movement parameters; and
a rotation controlling module configured for controlling the rotating mechanism to rotate based on the determined rotation parameters.

Optionally, the movement parameters include a moving distance and a moving direction of the moving target in the monitoring pictures; the rotation parameters include a rotating angle and a rotating direction of the rotating mechanism;
the data computing module is specifically configured for: determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module is configured for: performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

Optionally, the control device further includes:
an instruction sending module configured for determining a monitoring sequence of the monitoring devices based on the moving direction of the moving target; determining a current monitoring device corresponding to the actual position of the moving target based on position information of the moving target in the monitoring picture of each monitoring device; when the rotating angle of the rotating mechanism on which the current monitoring device is mounted reaches a preset threshold, sending a starting monitoring instruction to the next monitoring device in the monitoring sequence such that the next monitoring device starts to monitor the moving target.

Optionally, the control device further includes an alarming module for performing alarm processing, and
the image analyzing module is further configured for determining whether an image of the moving target has been captured by each monitoring device, and if determining that an image of the moving target has been captured by each monitoring device, determining whether each captured image of the moving target is within a preset image area, and if determining that this captured image of the moving target is within a preset image area, triggering the alarming module;
or,
the image analyzing module is further configured for triggering the alarming module when the determined movement parameters are not within a preset threshold range;
or,
the image analyzing module is further configured for identifying any image with a preset danger feature from the images captured by the monitoring devices, and if an image with a preset danger feature is identified, performing alarm processing,
or,
the image analyzing module is further configured for determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

Embodiments of the present application provide an application program, wherein, the application program is configured for carrying out the method for monitoring a moving target provided by embodiments of the present application. Wherein, the method for monitoring a moving target includes:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.

Embodiments of the present application provide a storage medium for storing an application program, the application program is configured for carrying out the method for monitoring a moving target provided by embodiments of the present application. Wherein, the method for monitoring a moving target includes:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.

Embodiments of the present application provide a method, a monitoring device, an apparatus, and a system for monitoring a moving target, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

### Brief Description of the Drawings

In order to explain the embodiments of the present application and the technical solutions of the prior art more clearly, the accompanying drawings to be used in the description of the embodiments and of the prior art will be described briefly below. Obviously, the accompanying drawings described below are only some embodiments of the present application. Those ordinary persons skilled in the art can obtain other drawings based on these drawings without any creative efforts.
Figure 1 is a schematic flowchart of a method for monitoring a moving target provided by embodiments of the present application;
Figure 2 is a schematic view of determining the rotating angle of a rotating mechanism;
Figure 3 is a schematic flowchart of another method for monitoring a moving target provided by embodiments of the present application;
Figure 4(a) is a schematic view when the rotating angle of the rotating mechanism where the camera within the dome camera is located is 0 degree;
Figure 4(b) is a schematic view when the leftward rotating angle of the rotating mechanism where the camera within the dome camera is located is 45 degrees;
Figure 5 is a schematic flowchart of another method for monitoring a moving target provided by embodiments of the present application;
Figure 6 is a schematic view of the locations of positioning the cradle head and dome cameras monitoring the airport runway;
Figure 7 is a schematic view of specific distances between adjacent dome cameras;
Figure 8 is a schematic view of the cradle head and dome cameras after the initial angles of view are adjusted to be uniform;
Figure 9 is a schematic view of tracking and monitoring by the dome cameras and the cradle head when the airplane reaches an intermediate position between the setup point corresponding to dome camera 1 and the setup point corresponding to dome camera 2;
Figure 10 is a schematic structural diagram of a monitoring device provided by embodiments of the present application;
Figure 11 is a schematic view of a monitoring system provided by embodiments of the present application.

### Description of Embodiments of the Invention

The technical solutions of embodiments of the present application will be clearly and completely described below in combination with the accompanying drawings. Evidently, the embodiments described below are merely some embodiments of the present application, instead of all the embodiments of the present application. Other drawings obtained by those skilled in the art without any creative efforts based on the embodiments of the present application fall within the protection scope of the present application.

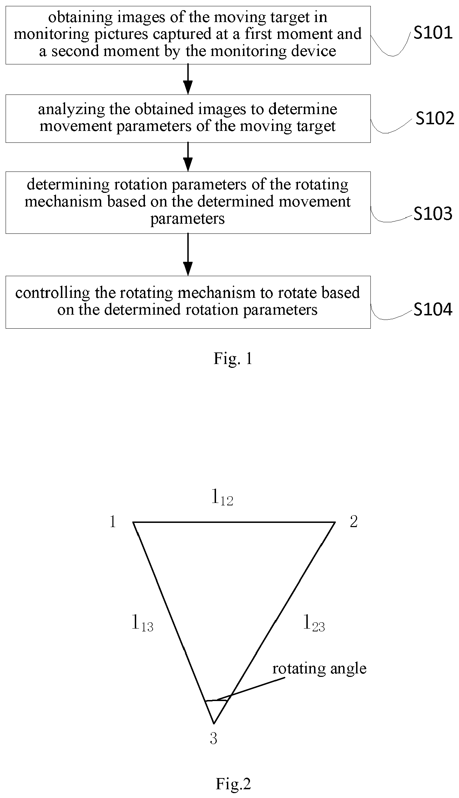

As shown in Figure 1, embodiments of the present application provide a method of monitoring a moving target, wherein a monitoring device is provided at each monitoring point location in a moving trajectory of the moving target, the monitoring device is mounted on a rotating mechanism, and there are a plurality of monitoring point locations in the moving trajectory; the method can include:
S101: obtaining images of the moving target in monitoring pictures captured at a first moment and a second moment by the monitoring device.

Wherein, the method shown in Figure 1 can be applied in a monitoring device or in a control device that communicatively connects with each of the monitoring devices.

In embodiments of the present application, in order to achieve the monitoring of a moving target, the images of the moving target in the monitoring pictures captured at a first moment and a second moment by the monitoring device are obtained.

To increase the success rate of monitoring, an interval between the first moment and the second moment can be relatively short. For example, it can be a time interval between two adjacent video frames in a video captured by the monitoring device. Optionally, a monitoring device with a high frame rate can be used for capturing video in order to increase the success rate of monitoring.

Specifically, the images of the moving target in the monitoring pictures captured by a monitoring device can be identified by image identification technologies, and the moving target can be at least one of any movable objects such as airplanes or vehicles.

Specifically, the monitoring device provided at a monitoring point location corresponding to an end of the moving trajectory can be a camera within a cradle head, and each of the other monitoring devices can be a camera within a dome camera. It can be understood that, the cradle head is provided with a rotating mechanism that can rotate horizontally and vertically, and the dome camera can be provided with a rotating mechanism that can rotate horizontally.

S102: analyzing the obtained images to determine movement parameters of the moving target.

Wherein, there may be several modes for analyzing the obtained images to determine movement parameters of the moving target. For example, the movement parameters of the moving target can be determined based on a key point on the image of the moving target or the contour of the moving target. Specifically, the key point can be (but not limited to) the central point or a boundary point of the moving target. Taking an airplane as an example, the key point can be a point of the central location of the airplane.

Specifically, the movement parameters can include the moving distance and moving direction of the moving target in the monitoring pictures.

Those skilled in the art can understand that, the time interval between the first moment and the second moment is obtained, the moving speed of the moving target in the monitoring pictures can be obtained based on the moving distance of the moving target in the monitoring pictures and the time interval, and the rotation parameters of the rotating mechanism are determined based on the moving speed.

The moving direction can be determined based on the relative position relationship between the image of the moving target in the monitoring picture at the first moment and the image of the moving target in the monitoring picture at the second moment. For example, assuming that the first moment is earlier than the second moment, when the position of the image of the moving target in the monitoring picture at the second moment is in the left side of the position of the image of the moving target in the monitoring picture at the first moment, the moving direction of the moving target can be determined to be from right to left; when the position of the image of the moving target in the monitoring picture at the second moment is in the right side of the position of the image of the moving target in the monitoring picture at the first moment, the moving direction of the moving target can be determined to be from left to right.

S103: determining rotation parameters of the rotating mechanism based on the determined movement parameters.

Specifically, the rotation parameters can include the rotating angle and rotating direction of the rotating mechanism; and the step S103 can include any one of the two determination modes.

In determination mode 1, the rotating angle of the rotating mechanism is determined based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located.

Those skilled in the art can understand that, the rotating angle of the rotating mechanism can be determined by using the law of cosines, based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located, but the mode of determining the rotating angle of the rotating mechanism is not limited to this.

For example, assuming that the moving target is an airplane, as shown in Figure 2, distances l₁₃ and l₂₃ can be obtained based on the moving distance l₁₂ of the airplane in the monitoring picture, the position 1 of the airplane in the monitoring picture at the first moment, the position 2 of the airplane in the monitoring picture at the second moment, and the virtual location 3 in the monitoring picture corresponding to the monitoring point location where the monitoring device is located, and the rotating angle of the rotating mechanism is determined by the law of cosines.

Of course, the rotating direction of the rotating mechanism can be determined based on the moving direction of the moving target in the monitoring pictures. For example, if the moving direction of the moving target in the monitoring pictures is from left to right, the rotating direction of the rotating mechanism is determined to be in a clockwise direction, but of course, it is not limited to this.

In determination mode 2, the distance transformation is performed on the moving distance of the moving target in the monitoring pictures based on a preset distance transformation equation to obtain an actual moving distance of the moving target;
the coordinate transformation is performed respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment;
the rotating angle of the rotating mechanism is determined based on the actual moving distance, the coordinates of the actual position of the moving target at the first moment, the coordinates of the actual position of the moving target at the second moment, and the monitoring point location where the monitoring device is located;
the rotating direction of the rotating mechanism is determined based on the moving direction of the moving target in the monitoring pictures.

S104: controlling the rotating mechanism to rotate based on the determined rotation parameters.

The rotating mechanism is controlled to rotate in the rotating direction by the rotating angle based on the determined rotating angle and rotating direction of the rotating mechanism, thus achieving real-time monitoring of the moving target through the rotation of the rotating mechanism, and avoiding the situation in which the moving target reaches a blind monitoring spot rendering monitoring impossible.

To increase the accuracy of tracking and monitoring, while the rotating mechanism is rotating, the image of the moving target in the monitoring picture captured by the monitoring device at the current moment can be obtained, and the image of the moving target in the monitoring picture captured at a certain earlier time are analyzed, the movement parameters of the moving target are determined again and the rotation parameters of the rotating mechanism are further determined, and the rotating mechanism is controlled to rotate based on the determined rotation parameters, thus achieving real-time continuous rotating of the rotating mechanism, which drives the monitoring device to rotate to monitor the moving target continuously.

In other embodiments of the present application, in order to obtain a clear image of the moving target in the monitoring picture captured by the monitoring device, the method shown in Figure 1 can further include:
obtaining a picture proportion of the image of the moving target in the monitoring picture;
adjusting the focal distance such that the picture proportion of the image of the moving target is within a preset proportion range.

Adjusting the focal distance is equivalent to adjusting the angle of view field such that the picture proportion of the image of the moving target is within the preset proportion range, thus ensuring that the moving target is completely within the monitoring picture and facilitating accurate monitoring of the moving target. For example, when the picture proportion of the image of the moving target is relatively small, the focal distance can be adjusted to increase the picture proportion such that the image of the moving target is clearer; and when the picture proportion of the image of the moving target is relatively large, the focal distance can be adjusted to decrease the picture proportion such that the image of the moving target is more complete.

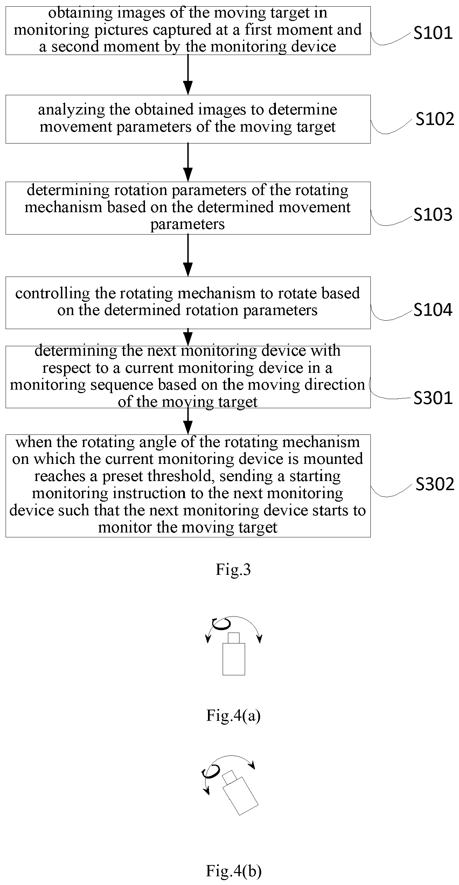

Based on the embodiment shown in Figure 1, as shown in Figure 3, another method for monitoring a moving target provided by embodiments of the present application can further include:
S301: determining the next monitoring device with respect to a current monitoring device in a monitoring sequence based on the moving direction of the moving target.

Wherein, the method shown in Figure 3 can be applied in the monitoring device.

For example, assuming that the moving target is an airplane and the moving trajectory is an airport runway, when the airplane is taking-off, the moving direction on the airport runway is from left to right, while the monitoring sequence is from left to right; when the airplane is landing, the moving direction on the airport runway is from right to left, while the monitoring sequence is from right to left.

S302: when the rotating angle of the rotating mechanism on which the current monitoring device is mounted reaches a preset threshold, sending a starting monitoring instruction to the next monitoring device such that the next monitoring device starts to monitor the moving target.

Wherein, the rotating mechanism can rotate leftwards and rightwards. When the rotating mechanism is not rotating, the rotating angle is 0 degree. Wherein, the preset threshold can be, but is not limited to, 45 degrees. The value of the preset threshold can be determined based on the actual situation. For example, in the case that the moving target is an airplane and the monitoring device is a camera within a dome camera, Figure 4(a) is a schematic view when the rotating angle of the rotating mechanism in which a camera within a dome camera is located is 0 degree, and Figure 4(b) is a schematic view when the leftward rotating angle of the rotating mechanism in which a camera within a dome camera is located is 45 degrees.

A correlate monitoring with all monitoring devices is achieved by sending a starting monitoring instruction to the next monitoring device, thus achieving seamless monitoring of the moving target and increasing the success rate of monitoring the moving target.

Further, if the next monitoring device fails to capture an image of the moving target, an alarm processing is performed. For example, assuming that the moving target is an airplane, an image of the airplane is captured in a monitoring picture of a first monitoring device, and if the airplane veers off the runway during the movement, the next monitoring device fails to capture an image of the airplane and an alarm processing is performed.

The method shown in Figure 3 can achieve a correlate monitoring of a moving target. Figure 3 is only one implementation of correlate monitoring, to which the present application is not limited. There can be various sequences of executing the specific steps, so long as step S301 is executed after step S102.

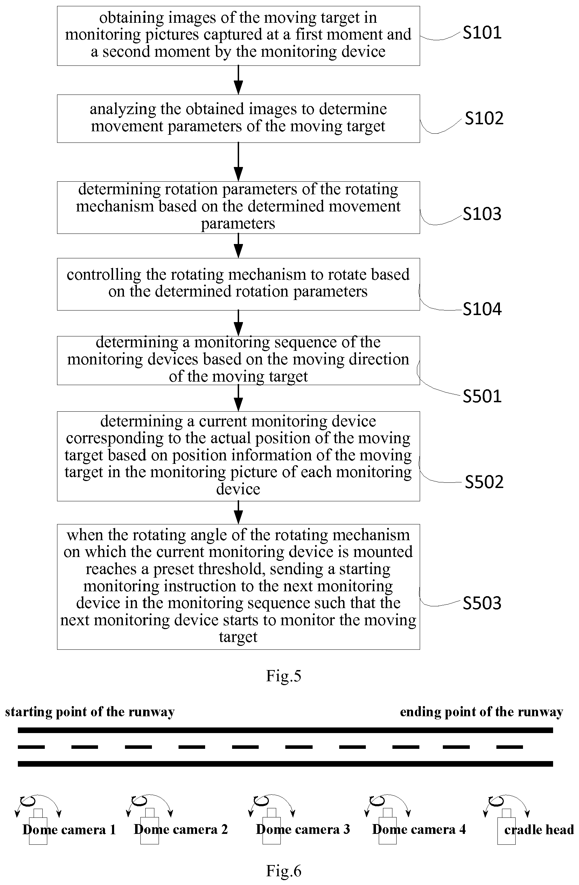

Based on the embodiment shown in Figure 1, as shown in Figure 5, another method for monitoring a moving target provided by embodiments of the present application can further include:
S501: determining a monitoring sequence of the monitoring devices based on the moving direction of the moving target.

Wherein, the method shown in Figure 5 can be applied in a control device that communicatively connects with each of the monitoring devices.

S502: determining a current monitoring device corresponding to the actual position of the moving target based on position information of the moving target in the monitoring picture of each monitoring device.

S503: when the rotating angle of the rotating mechanism on which the current monitoring device is mounted reaches a preset threshold, sending a starting monitoring instruction to the next monitoring device in the monitoring sequence such that the next monitoring device starts to monitor the moving target.

Those skilled in the art can understand that, the implementation of sending a starting monitoring instruction to the next monitoring device can be, but is not limited to, a control device that communicatively connects with each of the monitoring devices controlling a monitoring device to send a starting monitoring instruction.

The method shown in Figure 5 can achieve correlate monitoring of a moving target. Figure 5 is only one implementation of correlate monitoring, to which the present application is not limited. There can be various sequences of executing the specific steps, so long as step S501 is executed after step S102.

A method of monitoring a moving target provided by embodiments of the present application further includes various schemes for performing alarm processing, wherein the method is applied in a monitoring device, and further includes any one or more of an alarm scheme 1, an alarm scheme 2, and an alarm scheme 3.

In the alarm scheme 1, determining whether an image of the moving target has been captured, and if determining that an image of the moving target has been captured, determining whether the image of the moving target is outside a preset first image area, and if determining that the image of the moving target is outside a preset image area, performing alarm processing.

The first image area can be an area in which the moving trajectory is located. Specifically, the area in which the moving trajectory is located can be identified by image identification; if the image of the moving target is not within the first image area, the moving target may deviate from the preset moving trajectory and thus be in danger; therefore, it is determined whether the image of the moving target is outside the first image area, and if it is determined that the image of the moving target is outside the first image area, alarm processing is performed.

For example, assuming that the moving target is an airplane and the moving trajectory is an airport runway, the first image area can be an area where the runway is located, and if the airplane deviates from the airport runway, then alarm processing is performed.

In the alarm scheme 2, if the determined movement parameters are not within a preset threshold range, performing alarm processing.

The movement parameters can be the moving distance or moving speed; and if the moving distance or moving speed is not within a preset threshold range, then alarm processing is performed.

For example, assuming that the moving target is an airplane, if the moving distance or moving speed of the airplane is not within a threshold range since a malfunction is occurred in the airplane (e.g., the moving distance is too long because the airplane fails to take off, or the speed is too slow since an engine failure occurs when the airplane takes-off), then alarm processing is performed.

In the alarm scheme 3, determining whether the captured image contains an image with a preset danger feature, and if yes, performing alarm processing.

The preset danger feature can be, but is not limited to, smoke, blaze, or a bird.

For example, assuming that the moving target is an airplane, if smoke is generated in the airplane due to a failure in the airplane, then alarm processing is performed, or if a flying bird appears in the monitoring picture, in order to prevent accidents, alarm processing is needed to be performed.

Of course, the above-described method can also be applied in a control device that communicatively connects with each of the monitoring devices. The method shown in Figure 1 can further include any one or more of an alarm scheme 4, an alarm scheme 5, an alarm scheme 6, and an alarm scheme 7:
in the alarm scheme 4, determining whether each monitoring device has captured an image of the moving target, and if determining that each monitoring device has captured an image of the moving target, determining whether each captured image of the moving target is within a preset image area, and if determining that this captured image of the moving target is within a preset image area, performing alarm processing;
in the alarm scheme 5, if the determined movement parameters are not within a preset threshold range, performing alarm processing;
in the alarm scheme 6, identifying any image with a preset danger feature from the images captured by the monitoring devices, and if an image with a preset danger feature is identified, performing alarm processing; and
in the alarm scheme 7, determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

Specifically, assuming that the moving trajectory is an airport runway and the moving target is an airplane, the plurality of monitoring point locations can be 4 monitoring point locations, the distance between adjacent dome cameras can be 300 meters, and the distance between the cradle head and its adjacent dome cameras can be 300 meters.

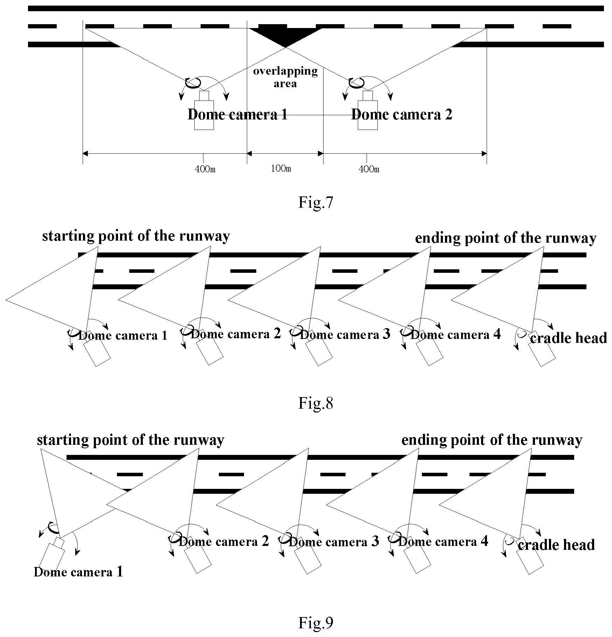

The cradle head and dome cameras that monitor the airport runway can be positioned as shown in Figure 6. The airport runway is a straight road. Currently, most airports meet the 4C standard, i.e., the length of a runway exceeds 1,800 meters. 4 dome cameras are provided at monitoring point locations of the airport runway, each of which covers a length of 400 meters, and finally, a cradle head is provided to monitor the last 200 meters and the air. The specific distances between adjacent dome cameras are as shown in Figure 7. The heights of the monitoring points are set based on the height of the airplane fuselage. Specifically, the set heights of the monitoring points can be higher than the height of the airplane fuselage. For example, if the height of the airplane fuselage is 13 meters, the height of the monitoring point can be set to be 15 meters.

Specifically, before each airplane takes off, the initial angles of view for the rotating mechanisms on which a dome camera is provided and the rotating mechanism on which a cradle head is provided can be initialized by a control device (for example, a control tower) that communicatively connects with the cameras within the dome cameras and the camera within the cradle head, i.e., the initial angles of view of monitoring are adjusted to be uniform as shown in Figure 8. The cameras within all the dome cameras enter into a motion detection mode. The airplane first appears in the monitoring picture of the camera within dome camera 1. The focal distance of the camera within dome camera 1 is adjusted in real time based on the size of the image of the airplane in the monitoring picture, thus ensuring the entire airplane appears within the monitoring picture. The horizontal orientation of the rotating mechanism on which dome camera 1 is provided is adjusted in real time by controlling a horizontal electrical motor within the dome camera, thus ensuring the entire airplane appears in the monitoring picture. In the course of the operations, the airplane moves from left-most to right-most in the monitoring picture of the camera within dome camera 1. At this point, the rotating angle of the rotating mechanism on which dome camera 1 is provided reaches a preset threshold, then a starting monitoring instruction is sent to the camera within dome camera 1, and the camera within dome camera 2 starts to track the airplane; further, it can be further determined whether the airplane reaches an intermediate position between a setup point corresponding to dome camera 1 and a setup point corresponding to dome camera 2, and if yes, the camera within dome camera 2 starts to track the airplane. At this point, the airplane appears in the monitoring pictures of both dome camera 1 and dome camera 2, thus ensuring the seamless monitoring of the airplane can be as shown in Figure 9.

Since the rotating mechanism on which a dome camera is provided does not have a function of pitching up, while the rotating properties of the rotating mechanism on which a cradle head is provided not only support the rotating horizontally by 360 degrees, but also support the rotating vertically by ±90 degrees. Thus, when the airplane appears in the monitoring picture of the camera of the cradle head, the camera within the cradle head is driven to monitor the airplane through the pitching-up function of the rotating mechanism on which the cradle head is provided, and thus achieving the monitoring of the airplane over the 100 meters of height after the airplane takes off.

With 4 dome cameras and 1 cradle head, by using the functions of motion detecting and motion tracking of the dome cameras and the cradle head, a correlate monitoring mechanism is implemented, and thus achieving monitoring during the entire course of the airplane taking off. Between adjacent monitoring point locations, an overlapping area of the monitoring picture is provided, ensuring the relay of monitoring an airplane by adjacent dome cameras, achieving seamless monitoring, providing guarantee of safety for airplane takeoff, and overcoming the bottleneck of long-distance monitoring of runways.

It can be seen that, embodiments of the present application provide a method for monitoring a moving target, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

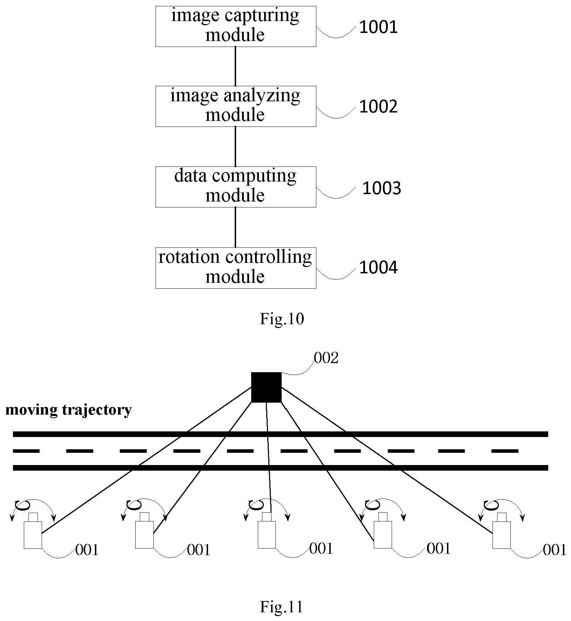

Figure 10 is a schematic structural diagram of a monitoring device provided by embodiments of the present application. Corresponding to the method shown in Figure 1, the monitoring device is mounted on a rotating mechanism, a monitoring device mounted on the rotating mechanism is provided at each monitoring point location in a moving trajectory of a moving target, there are a plurality of monitoring point locations in the moving trajectory; the monitoring device shown in Figure 10 can include:
an image capturing module 1001 configured for obtaining images of the moving target in monitoring pictures captured at a first moment and a second moment;
an image analyzing module 1002 configured for analyzing the obtained images to determine movement parameters of the moving target;
a data computing module 1003 configured for determining rotation parameters of the rotating mechanism based on the determined movement parameters; and
a rotation controlling module 1004 configured for controlling the rotating mechanism to rotate based on the determined rotation parameters.

Wherein, the movement parameters include a moving distance and a moving direction of the moving target in the monitoring pictures; the rotation parameters include a rotating angle and a rotating direction of the rotating mechanism.

The data computing module 1003 can be specifically configured for:
determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module 1003 can be configured for:
performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

Optionally, the monitoring device shown in Figure 10 can further include:
an instruction sending module configured for determining the next monitoring device with respect to the monitoring device in a monitoring sequence based on the moving direction of the moving target, and when the rotating angle of the rotating mechanism on which the monitoring device is mounted reaches a preset threshold, sending a starting monitoring instruction to the next monitoring device such that the next monitoring device starts to monitor the moving target.

Optionally, the monitoring device shown in Figure 10 can further include an alarming module for performing alarm processing, and
the image analyzing module is further configured for determining whether an image of the moving target has been captured by the monitoring device, and if determining that an image of the moving target has been captured by the monitoring device, determining whether the image of the moving target is outside a preset image area, and if determining that the image of the moving target is outside a preset image area, triggering the alarming module;
or,
the image analyzing module is further configured for triggering the alarming module when the determined movement parameters are not within a preset threshold range;
or,
the image analyzing module is further configured for determining whether the captured image contains an image with a preset danger feature, and if yes, triggering the alarming module.

Embodiments of the present application provide a monitoring device, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

Correspondingly, embodiments of the present application provide a monitoring apparatus; the monitoring apparatus can include: a rotating mechanism and any one of the monitoring devices in the embodiment described above, the monitoring device is mounted on the rotating mechanism.

Specifically, the monitoring apparatus can be a cradle head or a dome camera.

Embodiments of the present application provide a monitoring apparatus, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

As shown in Figure 11, embodiments of the present application provide a monitoring system; the monitoring system can include:
a plurality of monitoring devices 001 each of which is mounted on a rotating mechanism and a control device 002 that communicatively connects with each of the monitoring devices, a monitoring device 001 mounted on the rotating mechanism is provided at each monitoring point location in a moving trajectory of a moving target, there are a plurality of monitoring point locations in the moving trajectory; the control device 002 can include:
an image capturing module configured for obtaining images of the moving target in monitoring pictures captured at a first moment and a second moment by the monitoring device;
an image analyzing module configured for analyzing the obtained images to determine movement parameters of the moving target;
a data computing module configured for determining rotation parameters of the rotating mechanism based on the determined movement parameters; and
a rotation controlling module configured for controlling the rotating mechanism to rotate based on the determined rotation parameters.

Optionally, the movement parameters include a moving distance and a moving direction of the moving target in the monitoring pictures; the rotation parameters include a rotating angle and a rotating direction of the rotating mechanism;
the data computing module can be specifically configured for: determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module can be configured for: performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

The control device can further include:
an instruction sending module configured for determining a monitoring sequence of the monitoring devices based on the moving direction of the moving target; determining a current monitoring device corresponding to the actual position of the moving target based on position information of the moving target in the monitoring picture of each monitoring device; when the rotating angle of the rotating mechanism on which the current monitoring device is mounted reaches a preset threshold, sending a starting monitoring instruction to the next monitoring device in the monitoring sequence such that the next monitoring device starts to monitor the moving target.

Optionally, the control device can further include an alarming module for performing alarm processing, and
the image analyzing module is further configured for determining whether an image of the moving target has been captured by each monitoring device, and if determining that an image of the moving target has been captured by each monitoring device, determining whether each captured image of the moving target is within a preset image area, and if determining that this captured image of the moving target is within a preset image area, triggering the alarming module;
or,
the image analyzing module is further configured for triggering the alarming module when the determined movement parameters are not within a preset threshold range;
or,
the image analyzing module is further configured for identifying any image with a preset danger feature from the images captured by the monitoring devices, and if an image with a preset danger feature is identified, performing alarm processing;
or,
the image analyzing module is further configured for determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

Embodiments of the present application provide a monitoring system, wherein a monitoring device is provided at each monitoring point location in a moving trajectory of the moving target, the monitoring device is mounted on a rotating mechanism, and there are a plurality of monitoring point locations in the moving trajectory, wherein, images of the moving target in monitoring pictures captured at a first moment and a second moment by the monitoring device are obtained, the obtained images are analyzed to determine movement parameters of the moving target, rotation parameters of the rotating mechanism are determined based on the determined movement parameters, and the rotating mechanism is controlled to rotate based on the determined rotation parameters. The present application achieves the tracking and monitoring of a moving target by a monitoring device through the rotation of a rotating mechanism, avoiding the situation in which the moving target reaches a blind monitoring spot, and increasing the success rate of monitoring the moving target without increasing the number of monitoring devices.

Embodiments of the present application provide an application program, which is configured for carrying out the method for monitoring a moving target provided by embodiments of the present application when being executed. Wherein, the method for monitoring a moving target includes:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.

Embodiments of the present application provide a storage medium, which is configured for storing an application program for carrying out the method for monitoring a moving target provided by embodiments of the present application when being executed. Wherein, the method for monitoring a moving target can include:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.

It should be noted that, the relationship terms herein such as "first," "second" and the like are only used to distinguish one entity or operation from another entity or operation, and do not necessarily require or imply that there is any such actual relationship or sequence between those entities or operations. Moreover, the terms "include," "contain" or any other variants thereof are intended to cover a non-exclusive inclusion, such that processes, methods, objects, or devices comprising a series of elements include not only those elements, but also other elements not specified or the elements inherent to those processes, methods, objects, or devices. Without further limitations, an element limited by the phrase "comprise(s) a... " do not exclude that there are other identical elements in the processes, methods, objects, or devices that comprise that element.

The various embodiments in the specification are described in an interrelated way, and one need only refer to the same or similar portions of the various embodiments, with the focus of description for each embodiment being placed on the difference(s) with other embodiments. In particular, for system embodiments, as they are basically similar to the method embodiments, their description is relatively simply, and one need only refer to relevant parts of the description of the method embodiments.

Various embodiments in the specification are described in an interrelated way, and one need only refer to the same or similar portions of the various embodiments, with the focus of the description for each embodiment being placed on the difference(s) with other embodiments. In particular, for application and storage medium embodiments, as they are basically similar to the method embodiments, their description is relatively simply, and one need only refer to relevant parts of the description of the method embodiments.

What have been described above are merely preferred embodiments of the present application, and not intended to limit the scope of protection of the present application. Any modifications, equivalent substitutions, improvements within the spirit and principle of the present application all fall within the scope of protection of the present application.

## Claims

1. A method for monitoring a moving target, wherein, a monitoring device is provided at each monitoring point location in a moving trajectory of the moving target, the monitoring device is mounted on a rotating mechanism, and there are a plurality of monitoring point locations in the moving trajectory, and the method comprises:
obtaining images of the moving target in monitoring pictures captured at a first moment and a second moment by the monitoring device;
analyzing the obtained images to determine movement parameters of the moving target;
determining rotation parameters of the rotating mechanism based on the determined movement parameters; and
controlling the rotating mechanism to rotate based on the determined rotation parameters.

2. The method of claim 1, wherein, the movement parameters comprise a moving distance and a moving direction of the moving target in the monitoring pictures; the rotation parameters comprise a rotating angle and a rotating direction of the rotating mechanism;
determining rotation parameters of the rotating mechanism based on the determined movement parameters comprises:
determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
determining rotation parameters of the rotating mechanism based on the determined movement parameters comprises:
performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

3. The method of claim 1 or 2, wherein, the method is applied in the monitoring device, and the method further comprises:
determining the next monitoring device with respect to a current monitoring device in a monitoring sequence based on the moving direction of the moving target; when the rotating angle of the rotating mechanism on which the current monitoring device is mounted reaches a preset threshold, sending a starting monitoring instruction to the next monitoring device such that the next monitoring device starts to monitor the moving target.

4. The method of claim 1 or 2, wherein, the method is applied in a control device that communicatively connects with each of monitoring devices, and the method further comprises:
determining a monitoring sequence of the monitoring devices based on the moving direction of the moving target; determining a current monitoring device corresponding to the actual position of the moving target based on position information of the moving target in the monitoring picture of each monitoring device; when the rotating angle of the rotating mechanism on which the current monitoring device is mounted reaches a preset threshold, sending a starting monitoring instruction to the next monitoring device in the monitoring sequence such that the next monitoring device starts to monitor the moving target.

5. The method of claim 1, wherein, the method is applied in a monitoring device, and the method further comprises any one or more of an alarm scheme 1, an alarm scheme 2, and an alarm scheme 3, wherein
in the alarm scheme 1, determining whether an image of the moving target has been captured, and if determining that an image of the moving target has been captured, determining whether the image of the moving target is outside a preset image area, and if determining that the image of the moving target is outside a preset image area, performing alarm processing;
in the alarm scheme 2, if the determined movement parameters are not within a preset threshold range, performing alarm processing;
in the alarm scheme 3, determining whether the captured image contains an image with a preset danger feature, and if yes, performing alarm processing.

6. The method of claim 1, wherein, the method is applied in a control device that communicatively connects with each of the monitoring devices, and the method further comprises any one or more of an alarm scheme 4, an alarm scheme 5, an alarm scheme 6, and an alarm scheme 7, wherein
in the alarm scheme 4, determining whether each monitoring device has captured an image of the moving target, and if determining that each monitoring device has captured an image of the moving target, determining whether each captured image of the moving target is within a preset image area, and if determining that this captured image of the moving target is within a preset image area, performing alarm processing;
in the alarm scheme 5, if the determined movement parameters are not within a preset threshold range, performing alarm processing;
in the alarm scheme 6, identifying any image with a preset danger feature from the images captured by the monitoring devices, and if an image with a preset danger feature is identified, performing alarm processing; and
in the alarm scheme 7, determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

7. A monitoring device, wherein, the monitoring device is mounted on a rotating mechanism, a monitoring device mounted on the rotating mechanism is provided at each monitoring point location in a moving trajectory of a moving target, there are a plurality of monitoring point locations in the moving trajectory, and the monitoring device comprises:
an image capturing module configured for obtaining images of the moving target in monitoring pictures captured at a first moment and a second moment;
an image analyzing module configured for analyzing the obtained images to determine movement parameters of the moving target;
a data computing module configured for determining rotation parameters of the rotating mechanism based on the determined movement parameters; and
a rotation controlling module configured for controlling the rotating mechanism to rotate based on the determined rotation parameters.

8. The monitoring device of claim 7, wherein, the movement parameters comprise a moving distance and a moving direction of the moving target in the monitoring pictures; the rotation parameters comprise a rotating angle and a rotating direction of the rotating mechanism;
the data computing module is configured for: determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module is configured for: performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

9. The monitoring device of claim 7 or 8, wherein, the monitoring device further comprises:
an instruction sending module configured for determining the next monitoring device with respect to the monitoring device in a monitoring sequence based on the moving direction of the moving target, and when the rotating angle of the rotating mechanism on which the monitoring device is mounted reaches a preset threshold, sending a starting monitoring instruction to the next monitoring device such that the next monitoring device starts to monitor the moving target.

10. The monitoring device of claim 7, wherein, the monitoring device further comprises an alarming module for performing alarm processing, and
the image analyzing module is further configured for determining whether an image of the moving target has been captured by the monitoring device, and if determining that an image of the moving target has been captured by the monitoring device, determining whether the image of the moving target is outside a preset image area, and if determining that the image of the moving target is outside a preset image area, triggering the alarming module;
or,
the image analyzing module is further configured for triggering the alarming module when the determined movement parameters are not within a preset threshold range;
or,
the image analyzing module is further configured for determining whether the captured image contains an image with a preset danger feature, and if yes, triggering the alarming module.

11. A monitoring apparatus, comprising a rotating mechanism and a monitoring device of any one of claims 7 to 10, and the monitoring device is mounted on the rotating mechanism.

12. A monitoring system, comprising: a plurality of monitoring devices each of which is mounted on a rotating mechanism and a control device that communicatively connects with each of the monitoring devices, a monitoring device mounted on the rotating mechanism is provided at each monitoring point location in a moving trajectory of a moving target, there are a plurality of monitoring point locations in the moving trajectory, and the control device comprises:
an image capturing module configured for obtaining images of the moving target in monitoring pictures captured at a first moment and a second moment by the monitoring device;
an image analyzing module configured for analyzing the obtained images to determine movement parameters of the moving target;
a data computing module configured for determining rotation parameters of the rotating mechanism based on the determined movement parameters; and
a rotation controlling module configured for controlling the rotating mechanism to rotate based on the determined rotation parameters.

13. The monitoring system of claim 12, wherein, the movement parameters comprise a moving distance and a moving direction of the moving target in the monitoring pictures; the rotation parameters comprise a rotating angle and a rotating direction of the rotating mechanism;
the data computing module is configured for: determining the rotating angle of the rotating mechanism based on the moving distance of the moving target in the monitoring pictures, the position of the moving target in the monitoring picture at the first moment, the position of the moving target in the monitoring picture at the second moment, and a virtual location in the monitoring picture corresponding to the monitoring point location where the monitoring device is located; determining the rotating direction of the rotating mechanism based on the moving direction of the moving target in the monitoring pictures;
or,
the data computing module is configured for: performing distance transformation on the moving distance of the moving target in the monitoring pictures based on a preset distance transformation equation to obtain an actual moving distance of the moving target; performing coordinate transformation respectively on coordinates of a position of the moving target in the monitoring picture at the first moment, and coordinates of a position of the moving target in the monitoring picture at the second moment, to obtain coordinates of an actual position of the moving target at the first moment and coordinates of an actual position of the moving target at the second moment; determining the rotating angle of the rotating mechanism based on the actual moving distance, the coordinates of the actual position of the moving target at the first moment, the coordinates of the actual position of the moving target at the second moment, and the monitoring point location where the monitoring device is located; determining the rotating direction of the rotating mechanism based on the moving direction of the moving target in the monitoring pictures.

14. The monitoring system of claim 12 or 13, wherein, the control device further comprises:
an instruction sending module configured for determining a monitoring sequence of the monitoring devices based on the moving direction of the moving target; determining a current monitoring device corresponding to the actual position of the moving target based on position information of the moving target in the monitoring picture of each monitoring device; when the rotating angle of the rotating mechanism on which the current monitoring device is mounted reaches a preset threshold, sending a starting monitoring instruction to the next monitoring device in the monitoring sequence such that the next monitoring device starts to monitor the moving target.

15. The monitoring system of claim 12, wherein, the control device further comprises an alarming module for performing alarm processing, and
the image analyzing module is further configured for determining whether an image of the moving target has been captured by each monitoring device, and if determining that an image of the moving target has been captured by each monitoring device, determining whether each captured image of the moving target is within a preset image area, and if determining that this captured image of the moving target is within a preset image area, triggering the alarming module;
or,
the image analyzing module is further configured for triggering the alarming module when the determined movement parameters are not within a preset threshold range;
or,
the image analyzing module is further configured for identifying any image with a preset danger feature from the images captured by the monitoring devices, and if an image with a preset danger feature is identified, performing alarm processing;
or,
the image analyzing module is further configured for determining a time interval between the moment when the rotating angle of the left-most rotating mechanism is 0 and the moment when the rotating angle of the right-most rotating mechanism is 0 during monitoring the moving target, if the time interval is not within a preset threshold range, performing alarm processing.

16. An application program, wherein, the application program is configured for carrying out the method for monitoring a moving target of any one of claims 1 to 6 when being executed.

17. A storage medium, wherein, the storage medium is configured for storing an application program for carrying out the method for monitoring a moving target of any one of claims 1 to 6 when being executed.
